# EUROPÄISCHE PATENTSCHRIFT

(11) **EP 4 179 868 B1**
(45) Veröffentlichungstag und Bekanntmachung des Hinweises auf die Patenterteilung: **15.01.2025**
(21) Anmeldenummer: 22206951.0
(22) Anmeldetag: 11.11.2022
(51) Int. Cl.: A01D 44/00, B63B 1/10

(54) **KOMBINATION VON EINEM ARBEITSBOOT UND EINEM TRANSPORTMODUL UND VERFAHREN ZUM BETRIEBEN EINER SOLCHEN KOMBINATION**
COMBINATION OF A WORKBOAT AND A TRANSPORT MODULE AND METHOD OF OPERATING SUCH A COMBINATION
COMBINAISON D'UN BATEAU DE TRAVAIL ET UN MODULE DE TRANSPORTATION ET PROCÉDÉ DE FONCTIONNEMENT D'UNE TELLE COMBINAISON

(30) Priorität: 16.11.2021 DE 102021129802
(43) Veröffentlichungstag der Anmeldung: 17.05.2023
(73) Patentinhaber: DBFZ Deutsches Biomasseforschungszentrum gemeinnützige GmbH, 04347 Leipzig (DE)
(72) Erfinder: Stur, Mathias, 04275 Leipzig (DE); Stinner, Walter, 04425 Taucha (DE); Verworner, Bengt, 04317 Leipzig (DE)
(74) Vertreter: Weidner Stern Jeschke

(56) Entgegenhaltungen:
- JP-A- 2006 211 910
- JP-A- 2016 016 678
- US-A- 5 069 023

## Beschreibung

Die Erfindung betrifft eine Kombination von einem Arbeitsboot und einem Transportmodul.

Die Erfindung betrifft außerdem ein Verfahren zum Betreiben einer solchen Kombination, insbesondere zur Ernte von Wasserpflanzen W.

In der Patentschrift DE102010037781A1 ist ein Mähsammelboot zur Wasserpflanzenräumung mit einem Sammel- und Transportband, sowie mit bugseitig montiertem Mähwerk beschrieben, welches als Bootsrumpf zwei parallel angeordnete Rümpfe als Mehrrumpfboot aufweist. Zudem ist das Mähwerk dieses Bootes höhenverstellbar. Überdies verfügt das Mähsammelboot über Aufnahme-, Sammel- und Transportbänder.

Merkmale bei DE102010037781A1 sind die Kombination des höhenverstellbaren U-Mähwerks mit Aufnahme- und Üb ergab eb ändern. Diese technische Lösung mit bugseitig montiertem Mähwerk nutzt die Mehrrumpfbauweise unter gleichzeitiger Ausnutzung des Platzes zwischen den Rümpfen nicht aus, um bei der Höhenverstellung des Mähwerkes eine gute Lagestabilität zu behalten. Die Buganhängung des Arbeitswerkzeuges verlängert das Gesamtboot, verschiebt den Schwerpunkt nach vorne und bewirkt ein verstärktes Schaukeln bei Bewegung des Arbeitswerkzeuges. Dieses muss durch ausreichende Größe und Masse des Bootes im Verhältnis zum Arbeitswerkzeug ausgeglichen werden. Als weitere Konsequenz ergibt sich der Nachteil der erhöhten Größe, und der erhöhten Masse, jeweils im Verhältnis zur Arbeitsleistung und die damit verbundene verminderte Wendigkeit resp. Manövrierbarkeit.

Aus dem Dokument DE 185 8798 U1 ist ein kompaktes Ernte- beziehungsweise Mähboot bekannt, wobei das dortige Mähwerk mechanisch, insbesondere unter Nutzung einer Handkurbel, in der Höhe verstellbar ist. Auf diese Weise hat die Höhenverstellung des Werkzeuges wenig Einfluss auf den Schwerpunkt, jedoch ist die kombinierte Aufnahme des Erntegutes nur mit erhöhtem technischem Aufwand möglich.

Bekannt ist die JP 201616678 A, welche ein Ernteboot mit Doppelrumpfkonstruktion und einem schräg ins Wasser reichenden Aufnahmeband für das Erntegut offenbart. Die Ernteeinrichtung ist offensichtlich auch höhenverstellbar angeordnet.

Aus der JP 2006211910 A ist ein Ernteboot bekannt, bei welchem eine Ernteeinrichtung innerhalb des Bootes absenkbar ist:
Die US 5,069,023 A1 offenbart ein Ernteboot für Wasserpflanzen, bei welchem eine Ernteeinrichtung (20, 22) absenkbar am Boot angeordnet ist. Ebenso ist eine Verkettung mit beispielsweise nachfolgenden Unterstützungsbooten möglich.

Aufgabe der Erfindung ist es, eine Kombination Arbeitsboot-Transportmodul und ein Verfahren zum Betreiben einer solchen Kombination bereit zu stellen, welche die Nachteile des Standes der Technik überwinden. Das Arbeitsboot soll einen technisch einfachen Aufbau besitzen und insbesondere als Ernteboot zur kontinuierlichen Ernte von Wasserpflanzen W einsetzbar sein.

Der Erfindung liegt außerdem die Aufgabe zugrunde, das Erntegut, ausgehend von der Aufnahme auf eine quasikontinuierliche Weise, in technisch einfacher Art und Weise zwischenzulagern und an eine nachgeschaltete Handhabungstechnik, beispielsweise für Transportzwecke, intervallweise zu übergeben, wobei der Erntevorgang dabei nicht unterbrochen werden soll.

Die Aufgabe der Erfindung wird durch eine Kombination mit den Merkmalen gemäß Anspruch 1 und durch ein Verfahren mit den Merkmalen gemäß Anspruch 6 gelöst.

Damit werden die Vorteile der Mehrrumpfbauweise, insbesondere ein kompakter und leichter Aufbau des Arbeitsbootes 5, insbesondere als Ernteboot 6, bei gleichzeitig hoher Leistung im Verhältnis zur Bootsgröße beim Erntevorgang und der Übergabe des Erntegutes E, genutzt.

Durch die Anordnung des Bewegungsraumes zwischen zumindest zwei Rümpfen 2 wird erfindungsgemäß bei Bewegung des zumindest einen Arbeitswerkzeuges 5.1, insbesondere des Erntewerkzeuges 6.1, der Schwerpunkt des Arbeitsbootes 5 auf der in Querrichtung mittigen Längsachse in Längsrichtung um maximal 15 %, bezogen auf die Bootslänge, verschoben, ohne dass zusätzliche Ballastierungsmaßnahmen notwendig werden.

Dadurch ist ermöglicht, dass bei einer funktionsbedingten Höhenverstellung des Arbeitswerkzeuges 5.1 oder des Erntewerkzeuges 6.1 die Kippstabilität und Krängungssicherheit des Arbeitsbootes 5 beziehungsweise des Erntebootes 6 kaum beeinträchtigt wird.

Im Bewegungsraum des Tragrahmens 4.4 verläuft die Bewegungsbahn des Tragrahmens 4.4 parallel zur Längsachse des Arbeitsbootes 5 bzw. Erntebootes 6. Dabei ist eine vertikale Bewegung des Tragrahmens 4.4 parallel zur Längsachse des Arbeits- bzw. Erntebootes 6 gegeben, jedoch eine vernachlässigbare horizontale Bewegung des Tragrahmens 4.4. im Verhältnis zur Wasseroberfläche.

Im Bewegungsraum des variabel arbeitenden Arbeitswerkzeugs 5.1 befindet sich die Bewegungsbahn dieses Arbeitswerkzeugs 5.1, welche parallel zur Längsachse des Arbeits- bzw. Erntebootes 6 verläuft. Dabei ist im Wesentlichen eine vertikale Bewegung des Arbeitswerkzeugs 5.1 parallel zur Längsachse des Arbeits- bzw. Erntebootes 6 gegeben. Das Arbeitswerkzeug 5.1 ist, bevorzugt bis zu jeweils 50 % in beide Richtungen, aus der Bewegungsbahn des Tragrahmens 4.4 heraus, horizontal verschwenkbar.

Dadurch kann die komplette Bootsgröße und der komplette Auftrieb für die Aufnahme der Arbeitslast genutzt werden. Das Verhältnis von Bootsgröße zur Nutzmasse des Arbeitswerkzeuges 5.1 oder des Erntewerkzeuges 6.1 zuzüglich Arbeitslast, beispielsweise des entnommenen Erntegutes E, kann dadurch deutlich verbessert werden. Dies geht jedoch nicht zu Lasten der Manövrierbarkeit und Sicherheit auf Gewässern. Diese werden verbessert, weil der günstigere Schwerpunkt die Kippbewegungen um die Querachse des Arbeitsbootes 5 oder Erntebootes 6 bei Änderung der Arbeitstiefe und bei dem Ausheben des Arbeitswerkzeuges 5.1 oder Erntewerkzeuges 6.1 minimiert. Die Stabilität gegen Krängung, zum Beispiel bei Wellengang auf dem Gewässer G wird durch die Mehrrumpfbauweise minimiert, wie bei bestehenden technischen Lösungen. Es werden die Vorgaben zur Krängungssicherheit erfüllt. Hierbei werden Sicherheitsanforderungen gemäß geltenden Vorschriften, wie dem IS-Code 2008 über Intaktstabilität, so enthalten im Schreiben zur gewerbsmäßigen Nutzung von Sportbooten der Berufsgenossenschaft für Transport und Verkehrswirtschaft, erfüllt.

Gleichzeitig werden insbesondere bei Nutzung als Ernteboot 6 das Erntewerkzeug 6.1, das Förderband 4.1 und der Bewegungsraum zwischen den Rümpfen 2 zum Fördern und Zwischenlagern des Erntegutes E genutzt.

Das Arbeitsboot 5 ist nicht als Kompaktboot, sondern als Mehrrumpfboot aufgebaut. Dies hat erhebliche Vorteile. So kann das Erntewerkzeug 6.1, das mittels eines Tragrahmens 4.4 an einem Gelenk 4.5 aufgehängt ist, um die Anpassung an verschiedene Wassertiefen zu ermöglichen, gegenüber bisher verfügbaren Lösungen anstatt direkt am Bug deutlich weiter hinten, insbesondere zwischen den Rümpfen 2, aufgehängt werden. Das ermöglicht unabhängig vom Beladungszustand einen deutlich günstigeren Schwerpunkt, eine höhere Standsicherheit und bei gleicher Nutzlast der Aufbauten eine deutlich kleinere und kompaktere Bauweise, weil die Masse des bisher üblicherweise bugseitig angebauten Werkzeuges nicht mehr durch die gesamte Bootgröße und gegebenenfalls Ballastierung im Heck ausgeglichen werden muss. Das Arbeitsboot 5 ist dadurch kompakt und lagestabil. Vorteile der Mehrrumpfbauweise werden genutzt. Die Aufhängung des Arbeitswerkzeuges 5.1 zwischen den Rümpfen 2, verlagert den Schwerpunkt in die Mitte. Dadurch wird ein besseres Verhältnis von Arbeitsleistung und Aufnahmekapazität zu Länge und Größe, sowie eine bessere Lagestabilität des Erntebootes 6 realisiert, vor allem beim Ernte- und Überladevorgang.

Das Arbeitsboot 5 ist für eine Zuladungsmasse im Bereich von ca. 50 kg bis ca. 10 t bestimmt. Dabei weist das Arbeitsboot 5 eine Länge von ca. 2 bis ca. 15 m und eine Breite von ca. 1 bis ca. 5 m auf.

Die Neuheit des vorliegenden Arbeitsbootes 5 liegt vor allem in den oben genannten Bootseigenschaften. Außerdem wird ein modulares Konzept als mögliche, sehr vorteilhafte Kombination mit weiteren Modulen für Transport und Anlandung ermöglicht. Damit wird eine konsequent auf eine effiziente Ernte abgestimmte Kette bis zur Anlandung ermöglicht. Das beinhaltet einen gestaffelten Materialtransport durch Leichter 7.1 sowie zumindest einem Anlandemodul 7.2 zur Materialübergabe an Transportvorrichtungen T, wie Transportfahrzeuge oder Transportcontainer, jeweils auf Basis einer gemeinsamen technischen Plattform zur Kostensenkung, Flexibilisierung und Vereinfachung. Es kann das aufwendige und für die Uferzone problematische Verladen mit Radlader, Amphibienfahrzeugen etc. entfallen und die Anlandung muss nicht an vielgenutzten und damit konfliktträchtigen Bereichen hafenartiger Infrastruktur erfolgen, wie in einem Ausführungsbeispiel beschrieben. Hierzu existiert kein vergleichbares Konzept.

Bevorzugt ist, dass dieses Arbeitsboot 5 manuell, bevorzugt teil- oder hochautomatisiert, und/oder ferngesteuert betreibbar ist.

Der teil- oder hochautomatisierte Betrieb beinhaltet vor allem den Einsatz von Sensoren und eine Regelung mit teilweise oder vollständig automatisierter Betätigung aller erforderlichen Aktuatoren für Bootskopplungsvorgänge, Erntevorgang, Ausspeisebeziehungsweise Überladevorgänge, Betrieb der Ernteeinheit, Manövrieren des Arbeitsbootes 5 in der Ausführung als Ernteboot 6 zur Vereinfachung der Bootsbedienung.

Hochautomatisiert bedeutet im Sinne der Erfindung einen vollständig automatisierten Betrieb mit der Möglichkeit des manuellen Eingriffes, wobei diesbezüglich bekannte Bedienelemente vorhanden sind.

Der ferngesteuerte Betrieb beinhaltet die manuelle oder teil- oder hochautomatisierte Betätigung erforderlicher Aktuatoren über eine Funksteuerungseinheit, sodass der Sender, beispielsweise vom Ufer aus, Funksignale an den Empfänger auf dem Ernteboot 6 oder in umgekehrter Richtung als Sender vom Ernteboot 6 auf weitere Vorrichtungen, wie beispielsweise einen Leichter 7.1 oder zumindest ein Anlandemodul 7.2, überträgt.

Bevorzugt ist, dass das Arbeitsboot 5 oder Ernteboot 6 zumindest einen Bootantrieb 3 und eine Bedieneinheit 3.1 besitzt, wobei der Bootantrieb 3 bevorzugt durch einen Elektromotor angetrieben wird. Der Bootantrieb 3 kann alternativ mit einem Verbrennungsmotor betrieben werden.

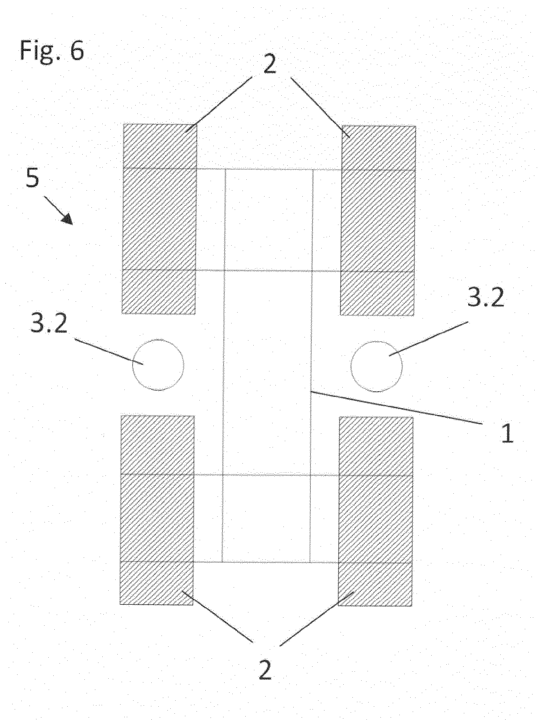

Die Bedieneinheit 3.1 dient zur Betätigung des Bootantriebes 3 und somit zum Manövrieren des Arbeitsbootes 5 beziehungsweise Erntebootes 6 auf dem Gewässer G. Durch einen kleinen Erntebootaufbau und eine kontinuierliche Ernte mit Übergabe auf dem Gewässer G ohne wesentliche Zwischenpufferung des Erntegutes E auf dem Ernteboot 6 ergibt sich eine bessere Manövrierbarkeit bei gleicher Ernteleistung im Vergleich zu üblichen Erntebooten mit größeren Dimensionen schon bei heckseitigem Antrieb. Durch eine mittige Anordnung der Antriebseinheiten 3.2, siehe Fig. 6, kann die hohe Manövrierbarkeit weiter verbessert werden.

Bevorzugt ist, dass das Arbeitsboot 5, insbesondere das Ernteboot 6 einen Bedienstand, bevorzugt mit Sitz 6.2, besitzt. Der Sitz 6.2 dient als Bedienstelle der Bedieneinheit 3.1 für das Bedienpersonal auf dem Ernteboot 6.

Bevorzugt ist, dass ein Rumpf 2 aus mindestens einem Hohlkörper 2.3, und/oder mindestens einem pneumatisch vorgespannten Membranluftkörper 2.1 und/oder mindestens einem mechanisch vorgespannten Membranfaltkörper 2.2 besteht. Eine Segmentierung eines Hohl-, Membranluft- und/oder Membranfaltkörpers ist auch Gegenstand der Erfindung. Durch die Anordnung von zumindest zwei, bevorzugt parallel angeordneten Rümpfen 2 wird der für das Schwimmen des Bootes erforderliche Auftrieb sowie eine hohe Lagestabilität im Gewässer G ermöglicht.

Besitzt das Ernteboot 6 zwei Rümpfe 2, ist das Erntewerkzeug 6.1 zwischen diesen mittig angeordnet.

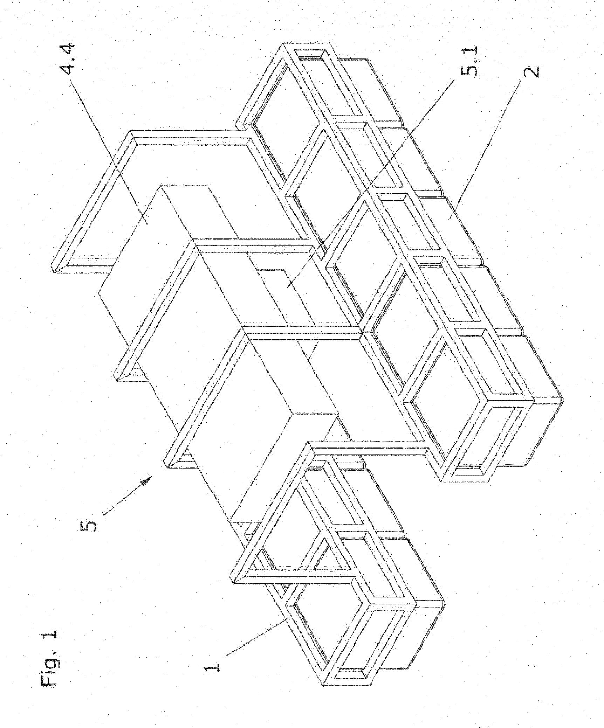

Im Sinne der Erfindung kann jeder Rumpf 2 als Rumpfverbund ausgebildet sein. Dabei sind Kombinationen aus nebeneinander oder hintereinander angeordneten Rümpfen 2 möglich, wie beispielhaft in Fig. 1, 2 und 6 dargestellt.

Bevorzugt ist, dass das Arbeitsboot 5 ein Ernteboot 6, ein Probennahmeboot, ein Boot für Bohranwendungen, für die Entnahme von Material und Gegenständen aus Gewässern, ein Rohrverlegeboot oder ein Boot mit einem Saug- und/oder Greifbagger ist oder zumindest als Schwimmplattform für Handhabungszwecke im Sinne wasserwirtschaftlicher sowie gewässerbaulicher Anwendungen dient. Damit sollen Vorgänge wie Bohrungen, Räumarbeiten oberhalb und/oder im Gewässer G sowie am Boden oder zu Land, Probenahmen, Verlege- oder Entnahmearbeiten ermöglicht werden.

Bevorzugt ist, dass das Arbeitsboot 5 zumindest eine Übergabeeinheit 4 besitzt und zur Übergabe von Transportgut T dient.

Bevorzugt ist, dass das Arbeitsboot 5 ein Ernteboot 6 und das Arbeitswerkzeug 5.1 ein Erntewerkzeug 6.1 ist sowie die Übergabeeinheit 4 den Tragrahmen 4.4 und zumindest ein Förderband 4.1 besitzt und damit das Förderband 4.1 durch den Tragrahmen 4.4 getragen wird. Dabei sind sowohl das Erntewerkzeug 6.1 sowie zumindest ein Förderband 4.1 der Übergabeeinheit 4 und das auf dem Förderband 4.1 zwischengelagerte Erntegut E in Querrichtung mittig zum Arbeitsboot 5 zwischen den in Längsrichtung verlaufenden zumindest zwei Rümpfen 2 oder den in Längsrichtung verlaufenden innenliegenden Rümpfen 2 angeordnet, wobei zumindest ein Förderband 4.1 der Übergabeeinheit 4 bevorzugt wasserdurchlässig ist.

Bevorzugt ist, dass die Positionierung des Arbeitswerkzeugs 5.1, insbesondere des Erntewerkzeuges 6.1 des Erntebootes 6, zwischen den Rümpfen 2 ein ruhiges und effizientes Arbeiten des Arbeitsbootes 5 ermöglicht.

Bevorzugt ist, dass der Tragrahmen 4.4 des Erntebootes 6 heckseitig an einem Gelenk 4.5 am Gestell 1 angeordnet ist und damit drehbar um das Gelenk 4.5 mit dem Gestell 1 verbunden ist.

Bevorzugt ist, dass der Schwenkantrieb 4.3 im Sinne eines Zustellaktuators mit dem Tragrahmen 4.4 und dem Gestell 1 verbunden ist. Damit soll durch eine Betätigung des Schwenkantriebs 4.3 eine Lageänderung des Tragrahmens 4.4, im Sinne eines Schwenkens in Bezug auf das Gestell 1 und drehbar um das Gelenk 4.5, ermöglicht werden.

Bevorzugt ist, dass das Erntewerkzeug 6.1 bugseitig am Tragrahmen 4.4 angeordnet ist, wobei das Erntewerkzeug 6.1 durch den Tragrahmen 4.4 getragen wird und durch das Schwenken des Tragrahmens 4.4 insbesondere der Schneidbereich des Erntewerkzeuges 6.1 in der Arbeitshöhe variabel einstellbar ist. Dabei ist bevorzugt ein Bereich von 0,25 m oberhalb der Gewässeroberfläche bis 2 m unterhalb der Gewässeroberfläche einstellbar.

Bevorzugt ist, dass zumindest ein Verbindungselement 4.2 der Übergabeeinheit 4 an dem Gestell 1 angeordnet ist. Dabei ist das Verbindungselement 4.2 zur wiederholgenauen Verbindung des Erntebootes 6 mit weiteren Wasserfahrzeugen wie Leichtern 7.1 bevorzugt mit einer Fangvorrichtung und selbstsichernder Verriegelung ausgeführt. Dadurch werden beispielsweise robuste Überladevorgänge bei schwierigen Witterungsbedingungen auf dem Gewässer G ermöglicht.

Bevorzugt ist, dass das Ernteboot 6 zumindest eine Sensorüberwachung für den Betrieb des Erntewerkzeugs 6.1 besitzt, was eine höhere Sicherheit ermöglicht.

Bevorzugt ist, dass das Ernteboot 6 einen Zwischenpuffer für das Erntegut E besitzt, wobei bevorzugt zumindest ein Förderband 4.1 der Übergabeeinheit 4 als Zwischenpuffer dient. Bei einem Wechselvorgang der Leichter 7.1 am Ernteboot 6 kommt es zu einer Unterbrechung der Erntegutabgabe. Durch die Zwischenpufferung des Erntegutes E auf zumindest einem Förderband 4.1 während des Leichterwechsels wird die Erntegutabgabe kurzzeitig überbrückt und ein kontinuierlicher Erntevorgang des Erntegutes E ermöglicht.

Besitzt das Ernteboot 6 zwei Rümpfe 2 ist das Förderband 4.1 zwischen diesen mittig angeordnet.

Besitzt das Ernteboot 6 mehr als zwei Rümpfe 2, ist das Förderband 4.1 zwischen den beiden innenliegenden Rümpfen 2 mittig angeordnet.

Konkret wird dabei der Raum zwischen den beiden parallelen Rümpfen 2 zur Aufhängung und als Bewegungsraum für das variabel arbeitende Arbeitswerkzeug 5.1 oder das bis in 2 m Wassertiefe arbeitende Erntewerkzeug 6.1 genutzt. Durch das im Verhältnis zu üblicher Technik erreichte geringere Auslegen des Arbeitswerkzeuges 5.1 oder Erntewerkzeuges 6.1 im Verhältnis zur Arbeitsleistung ist das Arbeitsboot 5 oder Ernteboot 6 kompakter, kürzer und manövrierfähiger. Dies ist vor allem in den häufig kritischen Bereichen in der Nähe des Ufers oder von Infrastruktur (u.a. Anlegestellen, Anlandepunkte A, Piere, Brückenpfeiler und Infrastruktur für die Naherholung) von Bedeutung.

Bevorzugt ist, dass das Förderband 4.1 als offen gestaltetes Förderband 4.1 mit beispielsweise Kunststoffgliedern ausgeführt ist, was zum einen die Gesamtmasse des Arbeitsbootes 5 oder Erntebootes 6 als Leichtbaumaßnahme reduziert und durch das zum anderen Wasser abtropfen kann.

Bevorzugt ist, dass eine Entwässerung des Erntegutes E durch Abtropfen von Tropfwasser auf einem wasserdurchlässigen Förderband 4.1 erfolgt. Tropfwasser ist das aus dem Gewässer G nach der Ernte an den Wasserpflanzen W zurückgebliebene Wasser, dass durch eine außerhalb des Gewässers G erfolgte Lagerung von den geernteten Wasserpflanzen W abfließt. Durch einen geringeren Wasseranteil der Erntegutmasse wird eine Erhöhung der Transporteffektivität bezüglich des Erntegutes E erreicht.

Es soll außerdem durch eine schonende Schneidtechnik ein geringstmögliches Maß an austretenden Ausscheidungen, vor allem Wasserpflanzensaft, der geschnittenen und geborgenen Wasserpflanzen W erreicht werden. Damit wird die Emission von Wasserpflanzensaft reduziert. Außerdem wird der Verlust des Energiegehaltes des Erntegutes E in Bezug auf eine mögliche Nutzung als Substrat beispielsweise in einer nachgeschalteten Biogasanlage reduziert.

Bevorzugt ist, dass das Ernteboot 6 ein wechselbares Erntewerkzeug 6.1 besitzt. Damit können in technisch einfacher Art und Weise unterschiedliche Werkzeuge, wie beispielsweise ein Balkenmähwerk, T-Mähwerk, U-Mähwerk oder ein Spindelmähwerk schnell und sicher gewechselt werden.

Bevorzugt ist, dass das Arbeitsboot 5 oder Ernteboot 6 ein technisch einfaches Ankoppelsystem mit zumindest einem Verbindungselement 4.2, bestehend aus einer Fangvorrichtung mit selbstsichernder Verriegelung, besitzt. Dabei soll durch zumindest ein Verbindungselement 4.2 eine wiederholgenaue Verbindung zwischen einem Erntebootes 6 und weiteren Transportmodulen 7 wie einem Leichter 7.1 oder einem Anlandemodul 7.2 ermöglicht werden. Dadurch werden beispielsweise robuste Überladevorgänge, insbesondere bei schwierigen Witterungsbedingungen, auf dem Gewässer G ermöglicht, damit das Ernteboot 6 ausschließlich zur Ernte eingesetzt wird und der zeitaufwendige Transport von Transportgut T, insbesondere Erntegut E mit zumindest einem oder korrespondierend arbeitenden Leichtern 7.1 erfolgen kann. Dies soll einen quasikontinuierlichen Materialfluss, insbesondere für Erntegut E, ermöglichen.

Quasikontinuierlich bedeutet im Sinne der Erfindung eine permanent mögliche Ernte des Erntebootes 6 bei gleichzeitig intervallweisem Überladen des Erntegutes E auf nachgeschaltete Aufnahmevorrichtungen, wie beispielsweise auf einen Leichter 7.1 auf dem Gewässer G oder auf eine Transportvorrichtung T an Land.

Der Erntevorgang von Wasserpflanzen W durch das Ernteboot 6 erfolgt durch den Einsatz eines Erntewerkzeuges 6.1, beispielsweise eines U-Mähwerkes und die Vorwärtsbewegung des Erntebootes 6 durch den Bootantrieb 3 auf dem Gewässer. Dabei wird in Abhängigkeit der Eigenschaften der Wasserpflanzen W die Vorwärtsbewegung beziehungsweise der Vorschub des Erntebootes 6 auf die Arbeitsgeschwindigkeit des Erntewerkzeuges 6.1 abgestimmt, um eine effiziente und naturschonende Ernte zu gewährleisten.

Es werden an unterschiedliche Wasserpflanzen W angepasste übliche Erntewerkzeuge eingesetzt.

Bevorzugt ist, dass Maßnahmen zum Schutz der Flora und Fauna getroffen werden und zumindest ein Fluchtbereich für Fauna, besonders bevorzugt im Bereich des Erntewerkzeuges 6.1 und vor der Übergabe auf das Förderband 4.1 besteht. Insbesondere unter Berücksichtigung der Empfehlungen für eine schonende und naturschutzgerechte Gewässerunterhaltung können so schwimmfähige Wassertiere, wie zum Beispiel Jungfische und Krebstiere, Wasserinsekten und Amphibien, fliehen, die durch den Erntevorgang zur Flucht angeregt werden. Dabei wird ein Fluchtbereich für eine Tiergröße bis 100 mm vorgesehen.

Die Aufgabe der Erfindung wird außerdem durch ein Verfahren gemäß den Merkmalen des Anspruchs 12 gelöst.

Erfindungswesentlich ist, dass das Verfahren zumindest den Verfahrensschritt eines Überladens des Erntegutes E von einem Ernteboot 6 auf ein Transportmodul 7 umfasst. Dabei ist bevorzugt, dass die Ernte durch ein Erntewerkzeug 6.1 erfolgt. Es wird dabei die Aufnahme des Erntegutes E auf das Förderband 4.1, die Zwischenlagerung auf dem Förderband 4.1 und das Überladen des Erntegutes E mittels Förderband 4.1 ermöglicht, siehe Ausführungsbeispiel 3. Damit ist zum einen die Ernte von Wasserpflanzen W auf dem Gewässer G an einer Erntestelle sowie die Zwischenlagerung des Erntegutes E auf dem Förderband 4.1 ermöglicht. Zum anderen ist das selbstständige Überladen von Erntegut E auf dem Gewässer G durch die Übergabeeinheit 4 und das Förderband 4.1 des Erntebootes 6 ausgehend vom Ernteboot 6 auf eine außerhalb des Erntebootes 6 befindliche Übergabestelle, wie beispielsweise ein Transportmodul 7 ermöglicht.

Bevorzugt ist, dass das Verfahren zumindest den Verfahrensschritt eines effizienten Überladens des Erntegutes E von einem Ernteboot 6 durch einen Ankoppelvorgang mit Fangvorrichtung und selbstsichernder Verriegelung an ein Transportmodul 7, bevorzugt einen Leichter 7.1 oder ein Anlandemodul 7.2, sowie ein selbstständiges Überladen des Erntegutes E auf den Leichter 7.1 durch die Betätigung des Förderbandes 4.1 ermöglicht. Dabei beruht der Leichter 7.1 und das Anlandemodul 7.2 auf derselben Plattformbauweise wie das Ernteboot 6.

Bevorzugt ist, dass der Verfahrensschritt eines effizienten und selbstständigen Überladens des Erntegutes E vom Ernteboot 6 auf den Leichter 7.1 die notwendige Kapazität der Zwischenpufferung auf dem Ernteboot 6 reduziert. Damit wird eine geringere Größe, ein kompakterer Aufbau und eine höhere Manövierbarkeit des Erntebootes 6 erzielt. Damit wird der Einsatzbereich des Erntebootes 6 in Bezug auf die Gewässergröße erweitert. Das heißt, dass eine effiziente Ernte sowohl bei kleinen als auch größeren Gewässern G mit dem gleichen Ernteboot 6 möglich ist.

Bevorzugt ist, dass das Verfahren zumindest den Verfahrensschritt Überladen des Erntegutes E von einem Ernteboot 6 auf eine Übergabestelle, welche sich außerhalb des Erntebootes 6 befindet, besonders bevorzugt auf einen Leichter 7.1 und/oder von diesem auf zumindest ein Anlandemodul 7.2 umfasst.

Damit ist ein arbeitsteiliger Erntevorgang mit einem Ernteboot 6, einem Leichter 7.1 und einem Anlandemodul 7.2 ermöglicht. Das Zusammenspiel von Ernteboot 6, Leichter 7.1 und zumindest einem Anlandemodul 7.2 kann durch parallel beziehungsweise zeitgleich ablaufende Verfahrensschritte erfolgen.

Beispielsweise können ein kontinuierlicher Erntevorgang und eine chargenweise Ausspeisung, beziehungsweise Übergabe des Erntegutes E, realisiert werden. Durch die Effizienz des automatisierten wiederholgenauen Überladevorganges schmälert auch eine geringe Kapazität der Zwischenpufferung auf dem Ernteboot 6 nicht die Effizienz des gesamten Ernteverfahrens. Dadurch ist ein kompakter Aufbau des Erntebootes 6 mit höherer Manövierbarkeit und geringerer Investition bei der Herstellung des Erntebootes 6 möglich.

Bevorzugt ist, dass das Verfahren mit mindestens einem Leichter 7.1 und zumindest einem Anlandemodul 7.2 betrieben wird. Dadurch werden Kostensenkungen ermöglicht, weil in der arbeitsteiligen Erntekette mit schneller und einfacher Überladung die sowohl investiv als auch vom Betrieb her teuerste Maschine, das Ernteboot 6, auf die hochwertigsten Aufgaben des Erntevorgangs konzentriert wird.

Vom Betrieb her können die Transportvorgänge viel leichter fernsteuerbar oder teil- oder hochautomatisiert gestaltet werden beziehungsweise von weniger qualifiziertem Personal bedient werden.

Bevorzugt ist, dass in Verbindung mit zumindest einem Leichter 7.1 und zumindest einem Anlandemodul 7.2 sowie dem Verfahrensschritt des selbstständigen und effizienten Überladens die Einsparung von Wegezeiten für das Ernteboot 6 und die Einsparung von Verladearbeit beispielsweise durch Radlader oder Bagger im Uferbereich U ermöglicht wird.

Bevorzugt ist, dass ein Ankoppelvorgang mit Fangvorrichtung und selbstsichernder Verriegelung zwischen dem Arbeitsboot 5, insbesondere dem Ernteboot 6 und dem nachfolgenden Transportmodul 7 erfolgt. Durch diese weitgehend automatisierbaren Ankoppelvorgänge und die Verfahrenskette sind Arbeitszeiteinsparungen durch Fernsteuerbarkeit beziehungsweise teil- oder hochautomatisiertem Betrieb von Transport und Anlandung ermöglicht.

Bevorzugt ist, dass in Verbindung mit mindestens einem Leichter 7.1 und zumindest einem Anlandemodul 7.2 die Entkopplung von Arbeitsaufgaben ermöglicht wird, was zu Kosteneinsparung und Effizienzsteigerung bei dem Verfahren gegenüber dem Stand der Technik führt.

Bevorzugt ist ein einfacher modularer Aufbau mit leicht verfügbaren Norm- und Bauteilen in kurzer Stückliste, der dadurch eine kostengünstige Herstellung sowie Wartung und Ersatzteilversorgung und damit gleichzeitig eine kostengünstig organisierbare hohe Betriebssicherheit ermöglicht.

Weitere Merkmale, Eigenschaften und Vorteile der vorliegenden Erfindung ergeben sich aus der nachfolgenden Beschreibung von Ausführungsbeispielen unter Bezugnahme auf die Figuren 1 bis 6.

Es zeigen:
- Fig. 1: eine Ausführungsform eines Arbeitsbootes 5 in einer schematischen perspektivischen Ansicht,
- Fig. 2: eine Ausführungsform der Rümpfe 2 in einer schematischen perspektivischen Ansicht,
- Fig. 3: eine Ausführungsform eines Erntebootes 6 in einer schematischen perspektivischen Ansicht,
- Fig. 4: ein Anwendungsbeispiel eines neuartigen Ernteverfahrens N im Vergleich zu einem konventionellen Ernteverfahren K in einer schematischen Draufsicht,
- Fig. 5: ein Anwendungsbeispiel eines neuartigen Ernteverfahrens N in einer schematischen perspektivischen Ansicht, und
- Fig. 6: eine Ausführungsform eines Arbeitsbootes 5 mit der Anordnung eines Bootantriebes 3 zwischen zwei nacheinander linear angeordneten Rümpfen 2 in einer schematischen Draufsicht.

Fig. 1 zeigt eine Ausführungsform eines Arbeitsbootes 5 in einer schematischen perspektivischen Ansicht. Das Arbeitsboot 5 besteht aus zumindest zwei Rümpfen 2, in Figur 1 sind zwei Rümpfe 2 relevant und dargestellt, einem Gestell 1 und einem Arbeitswerkzeug 5.1.

Der Tragrahmen 4.4 ist am Gestell 1 zwischen Bug und Heck befestigt. Das Arbeitswerkzeug 5.1 ist an einem Tragrahmen 4.4 angeordnet, wobei der Bewegungsraum des Tragrahmens 4.4 und/oder zumindest eines Arbeitswerkzeuges 5.1 in Querrichtung mittig zum Arbeitsboot 5 zwischen den in Längsrichtung verlaufenden zumindest zwei Rümpfen 2 liegt. Die Lage des Schwerpunktes des Arbeitsbootes 5 variiert bei der Lageänderung während des Arbeitsvorganges des Arbeitswerkzeuges 5.1 maximal um 15 %, bezogen auf die Bootslänge des Arbeitsbootes 5. Das Gestell 1 bildet die tragende Basis des Arbeitsbootes 5. Am Gestell 1 sind zwei parallel angeordnete Rümpfe 2 befestigt. Durch den Auftrieb der beiden Rümpfe 2 als Schwimmkörper im Gewässer G erreicht das Arbeitsboot 5 eine Schwimmbarkeit und Lagestabilität. Das Arbeitswerkzeug 5.1 ist an dem Tragrahmen 4.4 angeordnet und wird durch diesen getragen. Zwischen den beiden Rümpfen 2 ist der Tragrahmen 4.4 sowie das Arbeitswerkzeug 5.1 angeordnet. Durch die mittige Anordnung des Tragrahmens 4.4 mit dem Arbeitswerkzeug 5.1 wird eine stabile Lage des Arbeitsbootes 5 während des Einsatzes des Arbeitswerkzeuges 5.1 und bei ggf. auftretenden Arbeitslasten ermöglicht. Das Arbeitsboot 5 hat eine lichte Höhe von ca. 2 m, eine lichte Länge von ca. 4 m und eine lichte Breite von ca. 2m.

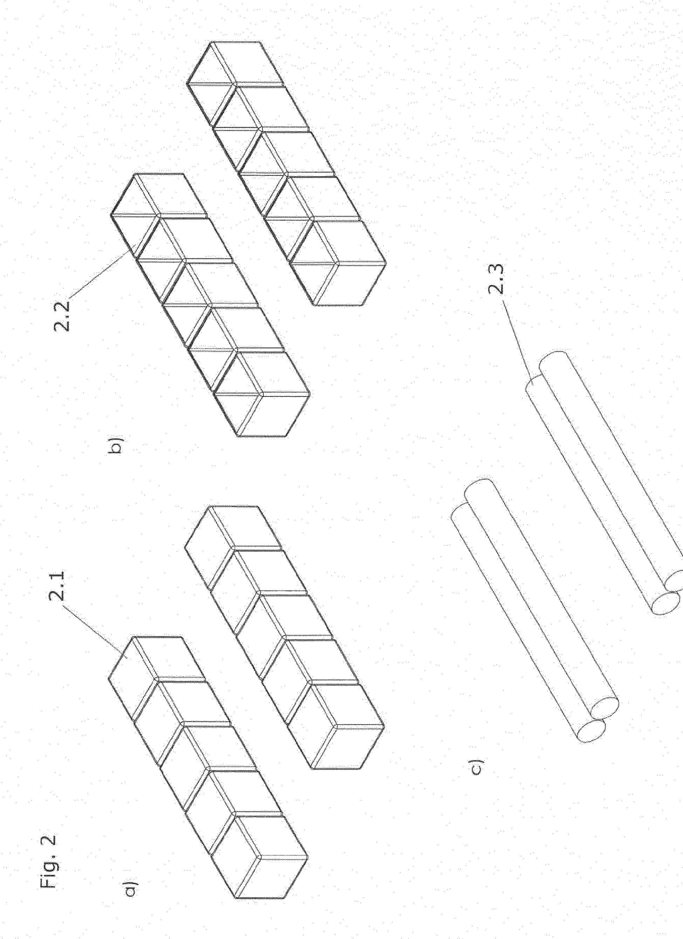

Fig. 2 zeigt drei Ausführungsformen der Rümpfe 2 in einer schematischen perspektivischen Ansicht. Jeder Rumpf 2 hat eine lichte Länge von ca. 4 m. Dabei soll ein Rumpf 2 zumindest aus
a) einem oder mehreren, in Fig. 2 a) beispielsweise fünf baugleichen quaderförmigen, in Reihe angeordneten pneumatisch vorgespannten Membranluftkörpern 2.1 und/oder
b) einem oder mehreren in Figur 2 b) beispielsweise fünf baugleichen quaderförmigen, in Reihe angeordneten mechanisch vorgespannten Membranfaltkörpern 2.2 und/oder
c) einem oder mehreren formstabilen Hohlkörpern 2.3, beispielsweise als geschlossene Zylinder gestaltet, ausgeführt sein.

Durch diese Ausführungsformen ist eine einfache Montage und Demontage am Gestell 1 sowie ein Transport der Rümpfe 2 in transportfreundlichen Abmaßen ermöglicht.

Die beispielsweise in Reihe angeordneten, pneumatisch vorgespannten Membranluftkörper 2.1 bestehen beispielsweise aus einer gas- und wasserdichten, witterungsbeständigen, flexiblen Membran, sind geschlossen ausgeführt sowie beispielsweise mit Luft gefüllt, wobei der hohle Membranluftkörper 2.1 beispielsweise mit einem relativen Überdruck zum vorhandenen Umgebungsdruck beaufschlagt ist, um eine wiederholgenaue Ausformung zu gewährleisten. Die Membranluftkörper 2.1 können zu Transportzwecken demontiert, entspannt und platzsparend verstaut werden.

Die beispielsweise in Reihe angeordneten, mechanisch vorgespannten Membranfaltkörper 2.2 bestehen beispielsweise aus einer wasserdichten, witterungsbeständigen und flexiblen Membran. Diese sind nach oben offen, beziehungsweise spritzwassergeschützt verschließbar zur Vermeidung von Wassereintritt ausgeführt, sowie durch Spannelemente, in Figur 2 nicht dargestellt, wie gelenkig gelagerte Druckstreben, Spangen oder Klemmen, vorgespannt, um eine wiederholgenaue Ausformung zu gewährleisten. Die Membranfaltkörper 2.2 können zu Transportzwecken demontiert, entspannt und platzsparend verstaut werden.

Die Hohlkörper 2.3 bestehen bevorzugt aus einem formstabilen, wasserdichten und schlagzähen Material, beispielsweise aus Kunststoff. Diese sind geschlossen und/oder schließbar, zur Vermeidung von Wassereintritt, ausgeführt.

Die genannten Ausführungsformen der Rümpfe 2, wie der Membranluftkörper 2.1, der Membranfaltkörper 2.2 und der Hohlkörper 2.3, werden jeweils lösbar miteinander verbunden und können alternativ als Vollkörper mit schwimmfähigem Material ausgeführt sein.

Die vorstehenden Beschreibungen gemäß Figur 2 beziehen sich im Sinne der Erfindung auf Ausgestaltungen der Erfindung mit zwei oder mehr als zwei Rümpfen 2.

Eine mögliche Segmentierung der Rümpfe 2 führt zur Erhöhung des Sicherheitsniveaus durch Schaffung eines Sinkschutzes im Falle einer Beschädigung eines Rumpfes 2.

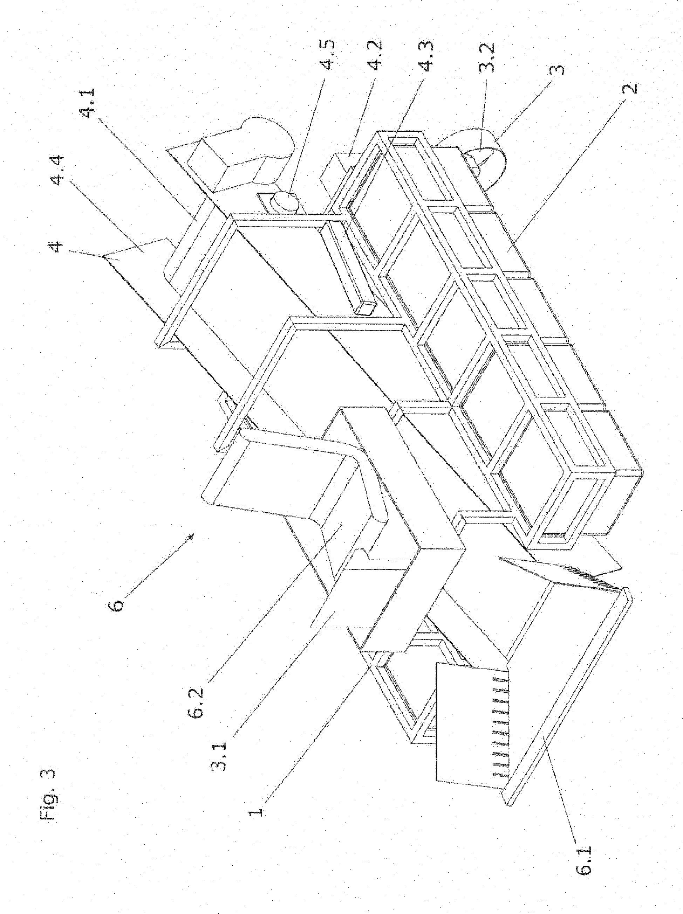

Fig. 3 zeigt eine Ausführungsform eines Erntebootes 6 in einer schematischen perspektivischen Ansicht.

Der Tragrahmen 4.4 ist am Gestell 1 zwischen Bug und Heck befestigt. Das Arbeitswerkzeug 5.1 ist an einem Tragrahmen 4.4 angeordnet, wobei der Bewegungsraum des Tragrahmens 4.4 und/oder zumindest eines Arbeitswerkzeuges 5.1 in Querrichtung mittig zum Ernteboot 6 zwischen den in Längsrichtung verlaufenden zumindest zwei Rümpfen 2 liegt. Die Lage des Schwerpunktes des Erntebootes 6 variiert bei der Lageänderung während des Arbeitsvorganges des Arbeitswerkzeuges 5.1 maximal um 15 %, bezogen auf die Bootslänge des Erntebootes 6.

Das Ernteboot 6 hat eine lichte Höhe von 2,5 m, eine lichte Länge von 5 m und eine lichte Breite von 2 m. Es besteht aus zwei Rümpfen 2, einem Gestell 1, einem Erntewerkzeug 6.1 und einer Übergabeeinheit 4. Das Gestell 1 bildet die tragende Basis des Arbeitsbootes 5. Am Gestell 1 sind zwei parallel angeordnete Rümpfe 2 befestigt. Durch den Auftrieb der beiden Rümpfe 2 als Schwimmkörper im Gewässer G erreicht das Ernteboot 6 seine Schwimmbarkeit und Lagestabilität. Durch die Mehrrumpfbauweise, beispielhaft die Zweirumpfbauweise, wird die Lagestabilität gegenüber der Einrumpfbauweise verbessert. Die Übergabeeinheit 4 wird durch das Gestell 1 getragen. Das Erntewerkzeug 6.1 ist an dem Tragrahmen 4.4 der Übergabeeinheit 4 angeordnet. Zwischen den beiden Rümpfen 2 ist die Übergabeeinheit 4 sowie das Erntewerkzeug 6.1 angeordnet.

Das Erntewerkzeug 6.1 dient zur Ernte von Wasserpflanzen W und ist beispielsweise als Mähbalken oder U-Mähwerk ausgeführt.

Der Tragrahmen 4.4 ist zwischen den beiden Rümpfen 2 sowie heckseitig an einem Gelenk 4.5 am Gestell 1 angeordnet und drehbar um das Gelenk 4.5 mit dem Gestell 1 verbunden.

Das Förderband 4.1 ist auf einem Tragrahmen 4.4 angeordnet und wird durch diesen Tragrahmen 4.4 getragen.

Der Schwenkantrieb 4.3 im Sinne eines Zustellaktuators ist mit dem Tragrahmen 4.4 und dem Gestell 1 verbunden. Es soll durch eine Betätigung des Schwenkantriebs 4.3 eine Lageänderung gemäß Anspruch 1 bis 3 im Sinne eines Schwenkens des Tragrahmens 4.4 in Bezug auf das Gestell 1 und drehend um das Gelenk 4.5 ermöglicht werden.

Das Erntewerkzeug 6.1 ist bugseitig am Tragrahmen 4.4 angeordnet, wobei das Erntewerkzeug 6.1 durch den Tragrahmen 4.4 getragen wird und durch die schwenkartige Lageänderung des Tragrahmens 4.4 in der Arbeitshöhe variabel im Bereich von 0,25 m oberhalb der Gewässeroberfläche bis 2 m unterhalb der Gewässeroberfläche einstellbar ist. Der Vorteil der Schwenkbewegung gegenüber einer linear vertikalen Höhenverstellung des Erntewerkzeuges 6.1 liegt in der Kombination der Höhenverstellbarkeit des Erntewerkzeuges 6.1 zur Anpassung an verschiedene Erntetiefen mit der gleichzeitigen Erntegutaufnahme auf die Übergabeeinheit 4, insbesondere auf das Förderband 4.1, sowie mit dem Schwerpunktausgleich.

Das Verbindungselement 4.2 der Übergabeeinheit 4 ist an dem Gestell 1 angeordnet. Dabei ist das Verbindungselement 4.2 zur wiederholgenauen Verbindung des Erntebootes 6 mit weiteren Wasserfahrzeugen, wie einem Leichter 7.1, bevorzugt teilbeziehungsweise vollautomatisiert durch eine Fangvorrichtung und selbstsichernde Verriegelung ausgeführt. Dadurch sind beispielsweise robuste Überladevorgänge bei schwierigen Witterungsbedingungen auf dem Gewässer G ermöglicht. Dies gilt besonders, soweit das Ernteboot 6 primär zur Ernte von Wasserpflanzen W eingesetzt wird und der zeitaufwendige Transport mit Leichtern 7.1 erfolgen kann.

Das Ernteboot 6 besitzt zumindest eine Sensorüberwachung, in Fig. 3 nicht dargestellt, die zum Beispiel bei dem Erntevorgang und dem Betrieb des Erntewerkzeuges 6.1 zum Schutz des Erntewerkzeuges 6.1 vor Beschädigungen durch Fremdkörper oder zur Vermeidung von Kollisionen mit Hindernissen dient. Dies soll eine höhere Sicherheit zur Vermeidung von Unfällen sowie einen robusten, schadens- und störungsfreien Erntevorgang ermöglichen.

Das Ernteboot 6 besitzt zumindest einen Bootantrieb 3 und eine Bedieneinheit 3.1, wobei der Bootantrieb 3 durch einen Elektromotor getrieben wird. Die Bedieneinheit 3.1 dient zur Betätigung des Bootantriebes 3 und somit zur Manövrierung des Erntebootes 6 im Gewässer G.

Der elektrische Bootantrieb 3 besitzt zwei parallel angeordnete Antriebseinheiten 3.2 sowie eine Bedieneinheit 3.1.

Der Rumpf 2 ist als pneumatisch vorgespannter Membranluftkörper 2.1 zur Erzeugung des Auftriebes im Gewässer G ausgeführt.

Die Anordnung des Tragrahmens 4.4 zwischen den Rümpfen 2 ermöglicht ein ruhiges und effizientes Arbeiten des Erntebootes 6 bei dem Einsatz des Erntewerkzeuges 6.1. Das Förderband 4.1 ist als offen gestaltetes Modulband, beispielsweise als Kunststoffgliederband, ausgeführt. Das Förderband 4.1 in Leichtbauweise reduziert zum einen die Gesamtmasse des Erntebootes 6 und ermöglicht zum anderen eine Entwässerung des Erntegutes E durch Abtropfen des Tropfwassers durch das wasserdurchlässige Förderband 4.1.

Das Ernteboot 6 besitzt einen Sitz 6.2. Der Sitz 6.2 dient als Bedienstelle der Bedieneinheit 3.1 für das Bedienpersonal auf dem Ernteboot 6.

Das Ernteboot 6 ist manuell betreibbar, alternativ bevorzugt teil- oder hochautomatisiert und/oder ferngesteuert betreibbar, in Fig.3 nicht dargestellt.

Es besteht ein Fluchtbereich für Fauna, in Fig. 3 nicht dargestellt, insbesondere für schwimmfähige Wassertiere wie beispielsweise Jungfische und Krebstiere, Wasserinsekten und Amphibien, besonders im Bereich des Erntewerkzeuges 6.1 und vor der Übergabe auf das Förderband 4.1, sodass schwimmfähige Wassertiere zur Flucht angeregt werden und fliehen können.

Das Verfahren zum Betreiben des Erntebootes 6 gemäß Fig. 3 setzt sich zumindest aus den Arbeitsschritten der Ernte, der Zwischenlagerung und des Überladens zusammen.

Der Erntevorgang erfolgt durch das Manövrieren, insbesondere die Vorwärtsfahrt, des Erntebootes 6 an der Erntestelle mittels des Bootantriebes 3 und der Bedieneinheit 3.1 sowie durch den Einsatz des Erntewerkzeuges 6.1 im Gewässer G. Dabei wird der Betrieb manuell, teil- oder hochautomatisiert oder ferngesteuert durchgeführt. Die Wasserpflanzen W werden durch das Erntewerkzeug 6.1, insbesondere im Schnittbereich des Schneidwerkes abgetrennt und als Erntegut E durch das dem Erntewerkzeug 6.1 nachgelagerte Förderband 4.1 aus dem Gewässer G aufgenommen. Dabei ist das Erntewerkzeug 6.1 durch Betätigung des Schwenkantriebs 4.3 und der damit verbundenen Schwenkbewegung des Tragrahmens 4.4 vertikal in der Arbeitshöhe variabel einstellbar. Nach der Aufnahme des Erntegutes E auf das Förderband 4.1 wird das Erntegut E auf dem Förderband 4.1 zwischengelagert. Das Erntegut E wird anschließend durch das Förderband 4.1 auf eine nachgeschaltete Vorrichtung, wie beispielsweise einen Leichter 7.1, übergeben, wobei der Leichter 7.1 dabei über zumindest ein Verbindungselement 4.2 wiederholgenau und robust mit dem Ernteboot 6 verbunden ist.

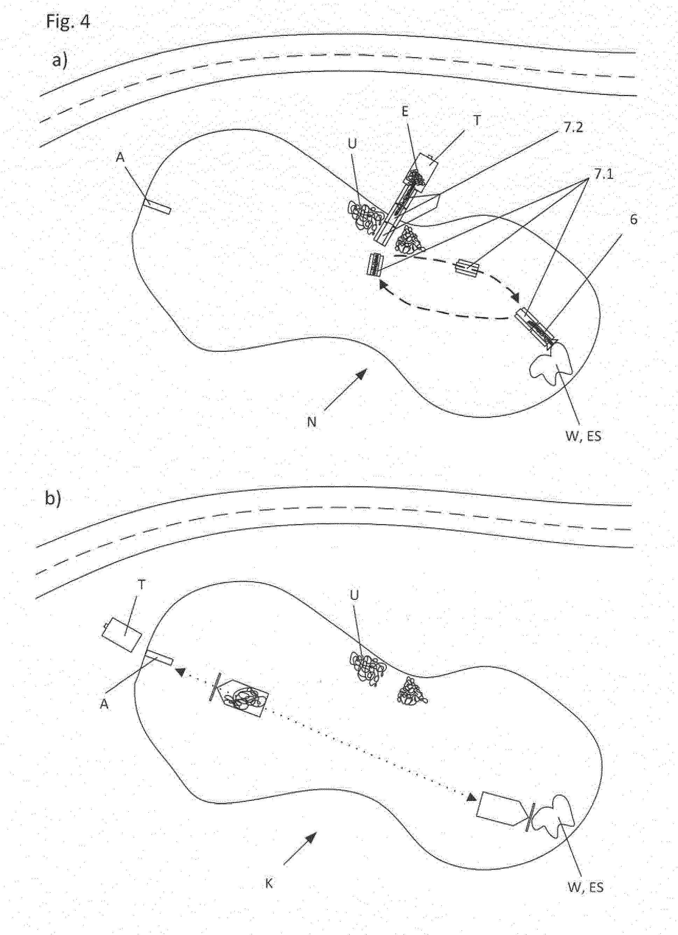

Fig. 4 zeigt ein Anwendungsbeispiel eines neuartigen Ernteverfahrens N, siehe a), im Vergleich zu einem konventionellen Ernteverfahren K, siehe b), in einer schematischen Draufsicht, wobei sich das Ernteboot 6 während des Erntevorganges dauerhaft an der Erntestelle ES befindet und den Erntevorgang von Wasserpflanzen W, bevorzugt permanent, durchführt. Es erfolgt zeitgleich dazu ein intervallweises selbstständiges Überladen des auf dem Ernteboot 6 zwischengelagerten Erntegutes E an einen von drei korrespondierend arbeitenden und sich abwechselnden, nachgeschalteten Leichtern 7.1 zum Abtransport des Erntegutes E. Das selbstständige Überladen erfolgt durch die Betätigung des Förderbandes 4.1, wobei das auf dem Förderband 4.1 befindliche Erntegut E zum Abgabebereich gefördert und abgegeben wird. Es ist dabei keine weitere von außen wirkender technischer Unterstützung, z. B. in Form eines Greifarmes, zur Abgabe des Erntegutes E erforderlich. Das Überladeintervall wird zeitlich durch den Überladevorgang des Erntegutes E vom Ernteboot 6 auf den angekoppelten Leichter 7.1, den Abkoppelvorgang des beladenen Leichters 7.1 vom Ernteboot 6 und durch den Ankoppelvorgang des nächsten nachfolgenden leeren Leichters 7.2 an das Ernteboot 6 bestimmt. Der An- und Abkoppelvorgang erfolgt über die Verbindungselemente 4.2 mit Fangvorrichtung und selbstsichernder Verriegelung, die stirnseitig an Bug und Heck der jeweils beteiligten Transportmodule 7 angeordnet sind. Der Abtransport des Erntegutes E durch den Leichter 7.1 erfolgt an das wasserseitig endständige Anlandemodul 7.2 einer Förderstrecke. Die Förderstrecke besteht aus drei nacheinander angeordneten und angekoppelten Anlandemodulen 7.2, wobei mindestens das in Förderrichtung letzte Anlandemodul 7.2 fest auf dem Boden des schwer zugänglichen Uferbereichs U positioniert ist. Es erfolgt ein wiederholgenauer Ankoppelvorgang zwischen dem beladenen Leichter 7.1 und dem wasserseitig endständigen Anlandemodul 7.2 und ein selbstständiges Überladen des Erntegutes E vom beladenen Leichter 7.1 durch die Betätigung des Förderbandes 4.1 des Leichters 7.1 auf das wasserseitig endständige Anlandemodul 7.2. Durch den dauerhaften Betrieb der Förderbänder 4.1 der drei in Reihe und zueinander überschuppt angeordneten Anlandemodule 7.2 im Sinne einer Förderstrecke erfolgt die Förderung des zu fördernden Erntegutes E in eine nachgeschaltete Transportvorrichtung T. Hierbei wird insbesondere ein Abrollcontainer, Anhänger oder Lastkraftwagen eingesetzt, der im gut zugänglichen und vom Untergrund her tragfähigen Bereich in der näheren Umgebung des schwer zugänglichen oder schlecht tragfähigen Uferbereiches U abstellbar ist. Dadurch sind keine aufwendigen Maßnahmen zur Schaffung eines Zuganges zum Uferbereich U beziehungsweise zur Überladestelle erforderlich. Es ist keine zusätzliche Verladetechnik, wie zum Beispiel Radlader, Bagger oder Kran notwendig. Der Uferbereich U wird zum Transport des Erntegutes E nicht mit Fahrzeugen, wie Amphibienfahrzeugen, befahren, was einer naturschonenden Anwendung entspricht. Weiterhin ist in Fig. 4 ein konventionelles Ernteverfahren K unter b) dargestellt. Hierbei wird ein im Vergleich zum Ernteboot 6 größeres konventionelles Ernteboot des konventionellen Ernteverfahrens K eingesetzt, dass entleert vom Anlandepunkt A zur Erntestelle ES fährt und die Wasserpflanzen W erntet. Es erfolgt die Aufnahme des Erntegutes E, bis die Lagerkapazität des Erntebootes des konventionellen Ernteverfahrens K erreicht ist. Anschließend erfolgt mit dem größeren konventionellen Ernteboot der Abtransport des Erntegutes E zu einem Anlandepunkt A mit fest installierter Infrastruktur, beispielsweise einem für die Anwendung geeigneten Steg. Am Anlandepunkt A wird das Erntegut E in Abhängigkeit der technischen Ausstattung des Erntebootes des konventionellen Ernteverfahrens K selbstständig oder mit weiterer technischer Unterstützung überladen und in eine Transportvorrichtung T gefördert. Der Weg des konventionellen Ernteverfahrens K ist durch eine gepunktete Linie und der Weg des neuartigen Ernteverfahrens N durch eine gestrichelte Linie dargestellt. Der Weg des konventionellen Ernteverfahrens K ist länger als der Weg des neuartigen Ernteverfahrens N, weil das konventionelle Ernteverfahren K Anlandepunkte A mit fest installierter Infrastruktur nutzt. Ansonsten müssen bei konventioneller Technik zusätzliche Transport- und Verladetechniken wie Amphibienfahrzeuge, Radlader, Bagger und/oder Greifer eingesetzt werden. Durch die uferschonenden Eigenschaften der Anlandemodule 7.2 ist eine freiere Wahl des Aufstellortes zur Anlandung, insbesondere nahe gelegen zur Erntestelle ES, ermöglicht. Somit sind kurze Fahrwege für die Leichter 7.1 zwischen Anlandemodul 7.2 und der Erntestelle ES und damit effiziente, zeit- und kostensparende Ernteketten möglich. Damit verbunden kann der Anlandepunkt A zur Aufstellung der Transportvorrichtung T variabler gewählt werden. Dadurch können weiterhin Nutzungskonflikte mit anderen Zwecken, zum Beispiel touristischer Art, um die fest installierten Anlandepunkte A, wie beispielsweise Stege, vermieden werden.

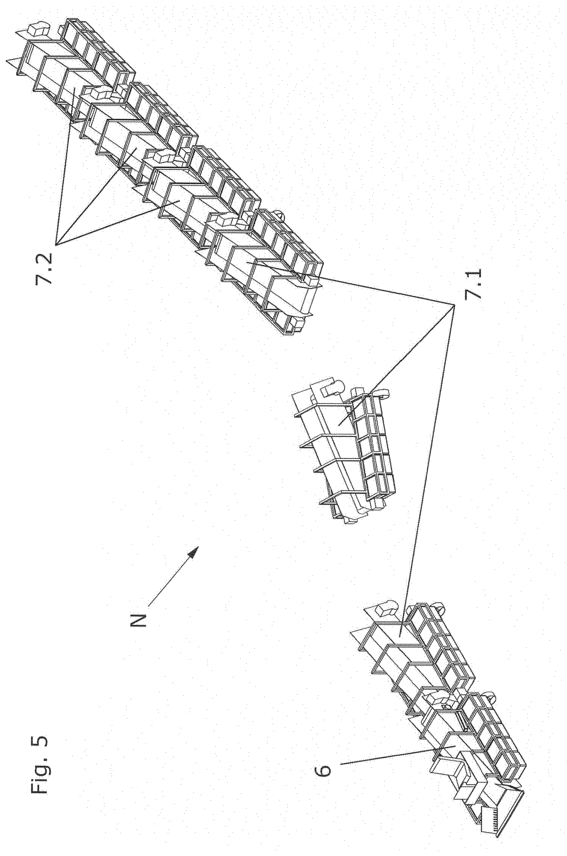

Fig. 5 zeigt ein Anwendungsbeispiel eines neuartigen Ernteverfahrens N in einer schematischen perspektivischen Ansicht. In der Fig. 5 sind ein Ernteboot 6, drei Leichter 7.1 und drei Anlandemodule 7.2 als Förderstrecke dargestellt. Es ist der Überladevorgang des Erntegutes E vom Ernteboot 6 auf den angekoppelten Leichter 7.1, der Transport des Erntegutes E durch den beladenen, frei schwimmenden Leichter 7.1 und der an das wasserseitig endständige Anlandemodul 7.2 der Förderstrecke angekoppelte korrespondierend arbeitende Leichter 7.1, sowie die nacheinander überschuppte Anordnung der Anlandemodule 7.2 im Sinne einer Förderstrecke gemäß Fig 4. dargestellt. Durch die Anzahl der Anlandemodule 7.2 ist die Förderstrecke vom Gewässer G zur Transportvorrichtung T variabel an die jeweiligen örtlichen Bedingungen der Anwendung anpassbar.

Fig. 6 zeigt eine Ausführungsform eines Arbeitsbootes 5 mit der Anordnung eines Bootantriebes 3 zwischen zwei hintereinander linear angeordneten Rümpfen 2 in einer schematischen Draufsicht. Hierbei ist ein Gestell 1, zwei Antriebseinheiten 3.2 sowie vier Rümpfe 2 dargestellt. Der Aufbau erfolgt in Längsrichtung entlang der langen Bootskante symmetrisch. Es sind auf jeder Seite des Arbeitsbootes 5 ein Rumpf 2, als Rumpfverbund aus zwei Schwimmkörpern in Reihe und in Längsrichtung hintereinander, sowie eine Antriebseinheit 3.2 zwischen den beiden Schwimmkörpern des Rumpfes 2 angeordnet. Die beiden Antriebseinheiten 3.2 befinden sich im schwimmenden Zustand des Arbeitsbootes 5 auf dem Gewässer G unterhalb des Wasserspiegels und sind vollständig eingetaucht. Durch die Anordnung der beiden Antriebseinheiten 3.2 jeweils zwischen den beiden in Längsrichtung hintereinander angeordneten Schwimmkörpern des Rumpfes 2 soll eine gute Manövrierfähigkeit des Arbeitsbootes 5 auf kleinem Bewegungsraum gewährleistet sein.

### Bezugszeichenliste

| Nummer | Bezeichnung |
|---|---|
| 1 | Gestell |
| 2 | Rumpf |
| 2.1 | Membranluftkörper |
| 2.2 | Membranfaltkörper |
| 2.3 | Hohlkörper |
| 3 | Bootantrieb |
| 3.1 | Bedieneinheit |
| 3.2 | Antriebseinheit |
| 4 | Übergabeeinheit |
| 4.1 | Förderband |
| 4.2 | Verbindungselement |
| 4.3 | Schwenkantrieb |
| 4.4 | Tragrahmen |
| 4.5 | Gelenk |
| 5 | Arbeitsboot |
| 5.1 | Arbeitswerkzeug |
| 6 | Ernteboot |
| 6.1 | Erntewerkzeug |
| 6.2 | Sitz |
| 7 | Transportmodul |
| 7.1 | Leichter |
| 7.2 | Anlandemodul |

| weitere | Bezeichnungen |
|---|---|
| A | Anlandepunkt |
| E | Erntegut |
| ES | Erntestelle |
| G | Gewässer |
| K | konventionelles Ernteverfahren |
| N | neuartiges Ernteverfahren |
| T | Transportvorrichtung |
| TG | Transportgut |
| U | Uferbereich |
| W | Wasserpflanzen |

## Patentansprüche

1. Eine Kombination von einem Arbeitsboot (5), insbesondere einem Ernteboot (6), und einem Transportmodul (7), insbesondere einem Leichter (7.1) oder einem Anlandemodul (7.2), die auf derselben Plattformbauweise beruhen, wobei das Arbeitsboot (5) und das Transportmodul (7) jeweils zumindest zwei Rümpfe (2), ein Gestell (1), zumindest ein Förderband (4.1) und zumindest einen Tragrahmen (4.4), der am Gestell (1) zwischen Bug und Heck im Heckbereich befestigt ist, aufweisen, wobei das Arbeitsboot (5) zumindest ein Arbeitswerkzeug (5.1), insbesondere ein Erntewerkzeug (6.1), das am Tragrahmen (4.4) angeordnet ist, beinhaltet, wobei der Bewegungsraum des Tragrahmens und/oder des Arbeitswerkzeuges (5.1) in Querrichtung mittig zum Arbeitsboot (5) zwischen den in Längsrichtung verlaufenden zumindest zwei Rümpfen (2) liegt und wobei das Arbeitsboot (5) und das Transportmodul (7) ein Ankoppelsystem mit zumindest einem Verbindungselement (4.2), bestehend aus einer Fangvorrichtung mit selbstsichernder Verriegelung, aufweisen.

2. Kombination gemäß des vorgenannten Anspruch 1, wobei das Arbeitsboot (5) manuell, teil- oder hochautomatisiert und/oder ferngesteuert betreibbar ist, wobei es den Einsatz von Sensoren und/oder zumindest einer Regelung mit teilweise oder vollständig automatisierter Betätigung der erforderlichen Aktuatoren für Bootskopplungsvorgänge, Erntevorgang, Ausspeise- beziehungsweise Überladevorgänge, Betrieb des Arbeits-, insbesondere Erntewerkzeuges (6.1), Manövrieren des Arbeitsbootes (5), insbesondere in der Ausführung als Ernteboot (6), zur Vereinfachung der Bootsbedienung beinhaltet.

3. Kombination gemäß mindestens einem der vorgenannten Ansprüche, wobei das Arbeitsboot (5), insbesondere das Ernteboot (6), sowie das Transportmodul (7), insbesondere der Leichter (7.1) zumindest einen Bootantrieb (3) aufweist, welcher bevorzugt durch einen Elektromotor angetrieben wird und bei dem mindestens eine Antriebseinheit (3.2) bevorzugt heckseitig oder mittig angeordnet

4. Kombination gemäß mindestens einem der vorgenannten Ansprüche, wobei die Rümpfe (2) jeweils aus mindestens einem Hohlkörper (2.3), und/oder mindestens einem pneumatisch vorgespannten Membranluftkörper (2.1) und/oder mindestens einem mechanisch vorgespannten Membranfaltkörper (2.2) bestehen.

5. Kombination gemäß mindestens einem der vorgenannten Ansprüche, wobei das Arbeitsboot (5) ein Ernteboot (6) und das Arbeitswerkzeug (5.1) ein Erntewerkzeug (6.1) ist, wobei der Tragrahmen (4.4) und zumindest ein Förderband (4.1) als Übergabeeinheit (4) ausgeführt sind, wobei sowohl das Erntewerkzeug (6.1) sowie zumindest ein Förderband (4.1) der Übergabeeinheit (4) und das auf dem Förderband (4.1) zwischengelagerte Erntegut (E) in Querrichtung mittig zum Ernteboot (6) zwischen den in Längsrichtung verlaufenden zumindest zwei Rümpfen (2) oder den in Längsrichtung verlaufenden innenliegenden Rümpfen (2) angeordnet sind, wobei zumindest ein Förderband (4.1) der Übergabeeinheit (4) bevorzugt wasserdurchlässig ist, wobei bevorzugt zumindest ein Förderband (4.1) als Zwischenpuffer dient.

6. Verfahren zum Betreiben der Kombination des Anspruchs 5, **dadurch gekennzeichnet, dass** das Verfahren zumindest den Verfahrensschritt Ernte von Wasserpflanzen (W), und die Verfahrensschritte Zwischenlagerung und Überladen des Erntegutes (E) vom Ernteboot (6) auf das Transportmodul (7) umfasst, wobei das Verfahren bevorzugt eine Zwischenpufferung des Erntegutes (E) auf dem zumindest einen Förderband (4.1) während einer Unterbrechung des Überladens umfasst.

7. Verfahren gemäß Anspruch 6, wobei das Verfahren zumindest der Verfahrensschritt eines effizienten und selbstständigen Überladens des Erntegutes (E) vom Ernteboot (6) auf das Transportmodul (7), bevorzugt einen Leichter (7.1) und/oder ein Anlandemodul (7.2), oder mehrere im Sinne einer Förderstrecke nacheinander in Reihe angeordnete Anlandemodule (7.2), bis zu einer auf dem Land positionierten Transportvorrichtung (T) ermöglicht, wobei das Verfahren durch eine modular korrespondierende Arbeitsweise und somit einen quasikontinuierlichen Förderstrom, insbesondere zur Überbrückung des Leichterwechsels (7.1) gekennzeichnet ist.

8. Verfahren gemäß mindestens einem der vorhergehenden Verfahrensansprüche, wobei der Verfahrensschritt eines effizienten und selbstständigen Überladens des Erntegutes (E) die notwendige Kapazität der Zwischenpufferung auf dem Ernteboot (6) reduziert.

9. Verfahren gemäß mindestens einem der vorgenannten Verfahrensansprüche, wobei ein Ankoppelvorgang mit Fangvorrichtung und selbstsichernder Verriegelung zwischen dem Ernteboot (6) und dem nachfolgenden Transportmodul (7) und/oder zwischen zumindest zwei Transportmodulen (7), also Leichter (7.1) und/oder Anlandemodul (7.2) untereinander erfolgt.

## Claims

1. Combination of a workboat (5), in particular a harvesting boat (6), and a transport module (7), in particular a barge (7.1) or a docking module (7.2), which are based on the same platform design, wherein the workboat (5) and the transport module (7) each have at least two hulls (2), a body (1), at least one conveyor belt (4.1) and at least one carrier frame (4.4), which is fastened on the body (1) between a bow and a stern in the rear area, wherein the workboat (5) contains at least one work tool (5.1), in particular a harvesting tool (6.1), which is arranged on the carrier frame (4.4), wherein the range of movement of the carrier frame and/or the work tool (5.1) is located in the transverse direction centrally with respect to the workboat (5), between the at least two hulls (2), which extend in the longitudinal direction, and wherein the workboat (5) and the transport module (7) have a coupling system having at least one connection element (4.2), consisting of a catching device having a self-retaining locking device.

2. Combination according to the preceding claim 1, wherein the workboat (5) can be operated manually, in a partially or highly automated manner and/or by remote control, wherein this includes the use of sensors and/or at least one control with partially or fully automated actuation of the required actuators for boat coupling processes, a harvesting process, discharge or load-transfer processes, operation of the work tool,
in particular the harvesting tool (6.1), manoeuvring of the workboat (5), in particular in the design as a harvesting boat (6), in order to simplify the boat operation.

3. Combination according to at least one of the preceding claims, wherein the workboat (5), in particular the harvesting boat (6), and the transport module (7), in particular the barge (7.1), has at least one boat drive (3), which is preferably driven by an electric motor and in which at least one drive unit (3.2) is preferably arranged at the rear or in the centre.

4. Combination according to at least one of the preceding claims, wherein the hulls (2) each consist of at least one hollow body (2.3), and/or at least one pneumatically preloaded membrane air body (2.1) and/or at least one mechanically preloaded membrane folding body (2.2).

5. Combination according to at least one of the preceding claims, wherein the workboat (5) is a harvesting boat (6) and the work tool (5.1) is a harvesting tool (6.1), wherein the carrier frame (4.4) and at least one conveyor belt (4.1) are designed as a transfer unit (4), wherein both the harvesting tool (6.1) and at least one conveyor belt (4.1) of the transfer unit (4) and the harvest yield (E) temporarily stored on the conveyor belt (4.1) are arranged in the transverse direction in the centre of the harvesting boat (6) between the at least two hulls (2) extending in the longitudinal direction,
wherein at least one conveyor belt (4.1)
of the transfer unit (4) is preferably water-permeable,
wherein preferably at least one conveyor belt (4.1) serves as an intermediate buffer.

6. Method for operating the combination according to claim 5,
**characterised in that** the method comprises at least the method step of harvesting aquatic plants (W), and the method steps of intermediate storing and load transferring of the harvest yield (E) from the harvesting boat (6) to the transport module (7), wherein the method preferably comprises intermediate buffering of the harvest yield (E) on the at least one conveyor belt (4.1) during an interruption of the load transfer.

7. Method according to claim 6, wherein the method facilitates at least the method step of an efficient and autonomous load transfer of the harvest yield (E) from the harvesting boat (6) to the transport module (7), preferably a barge (7.1) and/or
a docking module (7.2), or a plurality of docking modules (7.2) arranged in series in the sense of a conveying path, up to a transport device (T) positioned on the land, wherein the method is **characterised by** a modular corresponding mode of operation and thus a quasi-continuous conveyor flow, in particular for bridging the barge change (7.1).

8. Method according to at least one of the preceding method claims, wherein the method step of an efficient and autonomous load transfer of the harvest yield (E) reduces the required capacity of the intermediate buffering on the harvesting boat (6).

9. Method according to at least one of the preceding method claims, wherein a coupling process using the catching device and self-retaining locking device takes place between the harvesting boat (6) and the following transport module (7) and/or between at least two transport modules (7), i.e. the barge (7.1) and/or docking module (7.2).

## Revendications

1. Combinaison d'un bateau de travail (5), notamment d'un bateau de récolte (6), et d'un module de transport (7), notamment d'une barge (7.1) ou d'un module de débarquement (7.2), qui sont basés sur la même construction de plate-forme, le bateau de travail (5) et le module de transport (7) présentant chacun au moins deux coques (2), un châssis (1), au moins une bande de transport (4.1) et au moins un cadre porteur (4.4) qui est fixé au châssis (1) entre la proue et la poupe dans la zone de la poupe, le bateau de travail (5) comportant au moins un outil de travail (5.1), notamment un outil de récolte (6.1), qui est agencé sur le cadre porteur (4.4), l'espace de déplacement du cadre porteur et/ou de l'outil de travail (5.1) étant situé dans la direction transversale au milieu du bateau de travail (5) entre les au moins deux coques (2) s'étendant dans la direction longitudinale, et le bateau de travail (5) et le module de transport (7) présentant un système d'accouplement avec au moins un élément de liaison (4.2), constitué d'un dispositif d'accrochage avec verrouillage autobloquant.

2. Combinaison selon la revendication 1 précédente, dans laquelle le bateau de travail (5) peut être exploité manuellement, de manière partiellement ou hautement automatisée et/ou télécommandée, dans laquelle il comprend l'utilisation de capteurs et/ou d'au moins une régulation avec actionnement partiellement ou entièrement automatisé des actionneurs nécessaires pour les opérations d'accouplement du bateau, l'opération de récolte, les opérations de déchargement ou de transbordement, l'exploitation de l'outil de travail,
notamment de récolte (6.1), la manoeuvre du bateau de travail (5), notamment dans la réalisation en tant que bateau de récolte (6), afin de simplifier la commande du bateau.

3. Combinaison selon au moins l'une quelconque des revendications précédentes, dans laquelle le bateau de travail (5), notamment le bateau de récolte (6), ainsi que le module de transport (7), notamment la barge (7.1), présentent au moins un entraînement de bateau (3), qui est de préférence entraîné par un moteur électrique et dans lequel au moins une unité d'entraînement (3.2) est de préférence agencée du côté de la poupe ou au centre.

4. Combinaison selon au moins l'une quelconque des revendications précédentes, dans laquelle les coques (2) sont constituées chacune d'au moins un corps creux (2.3), et/ou d'au moins un corps membranaire à air (2.1) précontraint pneumatiquement et/ou d'au moins un corps membranaire pliable (2.2) précontraint mécaniquement.

5. Combinaison selon au moins l'une quelconque des revendications précédentes, dans laquelle le bateau de travail (5) est un bateau de récolte (6) et l'outil de travail (5.1) est un outil de récolte (6.1), le cadre porteur (4.4) et au moins une bande de transport (4.1) étant réalisés sous forme d'unité de transfert (4), l'outil de récolte (6.1) ainsi qu'au moins une bande de transport (4.1) de l'unité de transfert (4) et le produit récolté (E) entreposé sur la bande de transport (4.1) étant agencés dans la direction transversale au milieu du bateau de récolte (6) entre les au moins deux coques (2) s'étendant dans la direction longitudinale ou les coques (2) situées à l'intérieur s'étendant dans la direction longitudinale,
au moins une bande de transport (4.1)
de l'unité de transfert (4) étant de préférence perméable à l'eau,
de préférence au moins une bande de transport (4.1) servant de tampon intermédiaire.

6. Procédé d'exploitation de la combinaison de la revendication 5,
**caractérisé en ce que** le procédé comprend au moins l'étape de procédé de récolte de plantes aquatiques (W), et les étapes de procédé d'entreposage et de transbordement du produit récolté (E) du bateau de récolte (6) sur le module de transport (7), le procédé comprenant de préférence un stockage tampon intermédiaire du produit récolté (E) sur l'au moins une bande de transport (4.1) pendant une interruption du transbordement.

7. Procédé selon la revendication 6, le procédé comprenant
au moins l'étape de procédé d'un transbordement efficace et autonome du produit récolté (E) du bateau de récolte (6) sur le module de transport (7), de préférence une barge (7.1) et/ou
un module de débarquement (7.2), ou plusieurs modules de débarquement (7.2) agencés les uns après les autres en série au sens d'un parcours de transport, jusqu'à un dispositif de transport (T) positionné sur la terre ferme, le procédé étant **caractérisé par** un mode de fonctionnement correspondant modulaire et donc un flux de transport quasi-continu, notamment pour couvrir le changement de barge (7.1).

8. Procédé selon au moins l'une quelconque des revendications précédentes, dans lequel l'étape de procédé d'un transbordement efficace et autonome du produit récolté (E) réduit la capacité nécessaire du stockage tampon intermédiaire sur le bateau de récolte (6).

9. Procédé selon au moins l'une quelconque des revendications précédentes, dans lequel une opération d'accouplement avec dispositif d'accrochage et verrouillage autobloquant s'effectue entre le bateau de récolte (6) et le module de transport (7) suivant et/ou entre au moins deux modules de transport (7), c'est-à-dire la barge (7.1) et/ou le module de débarquement (7.2) entre eux.
